# EUROPÄISCHE PATENTSCHRIFT

(11) **EP 1 957 549 B1**
(45) Veröffentlichungstag und Bekanntmachung des Hinweises auf die Patenterteilung: **19.05.2010**
(21) Anmeldenummer: 06830111.8
(22) Anmeldetag: 24.11.2006
(51) Int. Cl.: C08F 218/04, C08F 220/18, C09J 131/02, C09J 133/08

(54) **POLYVINYLESTERFESTHARZE MIT HOHER POLYDISPERSITÄT**
POLYVINYLESTER SOLID RESINS HAVING HIGH POLYDISPERSITY
RESINES SOLIDES D'ESTERS POLYVINYLIQUES A POLYDISPERSITE ELEVEE

(30) Priorität: 08.12.2005 DE 102005058744
(43) Veröffentlichungstag der Anmeldung: 20.08.2008
(73) Patentinhaber: Wacker Chemie AG, 81737 München (DE)
(72) Erfinder: KÖHLER, Thomas, 84556 Kastl (DE)
(74) Vertreter: Schuderer, Michael
(86) Internationale Anmeldenummer: PCT/EP2006/068877
(87) Internationale Veröffentlichungsnummer: WO 2007/065804

(56) Entgegenhaltungen:
- US-A- 5 380 790
- US-A1- 2005 267 274

## Beschreibung

Die Erfindung betrifft Polyvinylester-Festharze mit hoher Polydispersität, Verfahren zu deren Herstellung sowie deren Verwendung.

Bei der Herstellung von auf Lösemittel basierenden Klebstoffzusammensetzungen werden häufig Polyvinylacetat-Festharze eingesetzt, da diese auf einer Vielzahl von Substraten eine ausgezeichnete Haftung aufweisen (DE 20 2004 014 691 U1). In der DE 1 060 142 AS wird empfohlen, niedermolekulare Polyvinylacetat-Festharze mit enger Molekulargewichtsverteilung für die Herstellung von Klebstoffen und Lacken einzusetzen. Dazu wird das Festharz nach dem Suspensionspolymerisationsverfahren hergestellt, wobei Katalysator und Regler in einem äquimolaren Verhältnis zueinander eingesetzt werden, und zur Aufrechterhaltung einer konstanten Monomerenkonzentration zusammen mit den Monomeren kontinuierlich zudosiert werden. Um die Löslichkeit von Vinylacetat-Ethylen-Copolymerfestharzen in den für Klebstoffe üblichen organischen Lösemitteln zu verbessern, wird in der DE 1 745 570 OS empfohlen, bei deren Herstellung aliphatische Aldehyde mit einer Kettenlänge von 4 bis 8 C-Atomen einzusetzen.

Für die Festigkeit der Verklebung (Kohäsion) ist das Molekulargewicht des eingesetzten Polyvinylacetat-Festharzes mit entscheidend. Je höher dieses ist, umso höhere Festigkeiten können erzielt werden. Parallel steigt mit dem Molekulargewicht des Harzes - bei ansonsten gleicher Polymerzusammensetzung - aber auch die Viskosität der Harzlösung an. Will man eine bestimmte für die Anwendung günstige Viskosität des Klebstoffes basierend auf einem höhermolekularen Harz einstellen, so muss man bei gleicher Harzmenge eine größere Menge an Lösemittel einsetzen. Auf Grund der Emission von Lösemitteln beim Aushärten der Klebstoffe, ist man aber gerade bestrebt, die Lösemittelmenge möglichst zu verringern.

Es bestand daher die Aufgabe, Polyvinylester-, insbesondere Polyvinylacetat-Festharze zur Verfügung zu stellen, welche bezüglich des vorgenannten Eigenschaftsprofils für Klebstoff optimiert sind, das heißt gegenüber aus dem Stand der Technik bekannten Festharzen, bei gleichem mittleren Molekulargewicht eine deutlich geringere Lösungsviskosität zeigen.

Überraschenderweise wurde gefunden, dass solche Festharze mit einer breiteren Molekulargewichtsverteilung als üblich bei ansonsten gleichem mittlerem Molekulargewicht eine deutlich geringere Lösungsviskosität zeigen, wobei die mit solchen Produkten hergestellten Verklebungen gleichzeitig vergleichbare Festigkeit ergeben. Durch Einsatz solcher Harze können nun Klebstoffformulierungen bereitgestellt werden, die zum Einstellen einer vergleichbaren Viskosität geringere Lösemittelmengen benötigen und somit beim Aushärten auch weniger Emissionen aufweisen.

Am Markt etablierte Polyvinylester-Festharze zeigen eine vom Molekulargewicht abhängige Polydispersität. Je höher das Molekulargewicht, umso höher ist auch die Polydispersität, die Breite der Molekulargewichtsverteilung. Bei definiertem Molekulargewicht gibt es jedoch keine Variation der Molekulargewichtsverteilung. Gängige Typen weisen beispielsweise bei einem gewichtsmittleren Molekulargewicht Mw von 110.000 bis 150.000 eine Polydispersität von 3,5 auf.

Der US 5, 380, 790 lag die Aufgabe zugrunde, wässrige Beschichtungsmittel auf der Basis von Methacrylsäure/Ethylacrylat-Polymerisate, welche zur Beschichtung von von festen pharmazeutischen Darreichungsformen eingesetzt werden, dahingehend zu verbessern, dass mit geringeren Mengen an Beschichtungsmittel bessere Beschichtungen erhalten werden. Dies wurde erreicht mit einem Verfahren zur Emulsionspolymerisation, bei dem in Gegenwart einer spezifischen Emulgatorkombination polymerisiert wird. Der Regler wird beginnend mit dem Start der Polymerisation zudosiert. Die US 2005/0267274 A1 betrifft Trithiocarbonatverbindungen und insbesondere deren Verwendung als Initiatoren und Regler bei der Polymerisation. Es wird besonders hervorgehoben, dass bei deren Einsatz als Regler Polymerisate mit niederer Polydispersität resultieren.

Gegenstand der Erfindung sind Polyvinylester in Form deren Festharze, erhältlich mittels radikalisch initiierter Suspensionspolymerisation, **dadurch gekennzeichnet, dass** das Festharz bei einem gewichtsmittleren Molekulargewicht Mw von < 300.000 eine Polydispersität PD von ≥ 5 und bei einem gewichtsmittleren Molekulargewicht Mw von 300.000 bis 1.500.000 eine Polydispersität PD von ≥ 10 aufweist.

Ein weiterer Gegenstand der Erfindung ist ein Verfahren zur Herstellung von Polyvinylestern in Form deren Festharze mittels radikalisch initiierter Suspensionspolymerisation in wässrigem Medium von Vinylester- oder Basismonomer und gegebenenfalls bis zu 50 Gew.-%, bezogen auf das Gesamtgewicht der Monomere, weiterer damit copolymerisierbarer Monomere, in Gegenwart von einer oder mehreren das Molekulargewicht regelnden Verbindungen, **dadurch gekennzeichnet, dass** die das Molekulargewicht regelnde Verbindung so zugegeben wird, dass das molare Verhältnis von Regler zu freiem Monomer im Verlauf der Polymerisation zunimmt.

Geeignete Vinylester-Basismonomere sind Vinylester von unverzweigten oder verzweigten Alkylcarbonsäuren mit 1 bis 18 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 13 C-Atomen, beispielsweise VeoVa9^{R} oder VeoVa10^{R} (Handelsnamen der Firma Resolutions). Besonders bevorzugt wird Vinylacetat.

Die Polyvinylester- Festharze können neben dem jeweiligen Basismonomer gegebenenfalls noch weitere Monomereinheiten enthalten. Vom Basismonomer verschiedene Comonomere werden im allgemeinen in einer Menge von < 50 Gew.-%, vorzugsweise 1 bis 40 Gew.-%, jeweils bezogen auf das Gesamtgewicht der Monomere, copolymerisiert. Geeignete Comonomere sind ein oder mehrere Monomere aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen oder Diolen mit 1 bis 18 C-Atomen, ethylenisch ungesättigte Mono- und Di-Carbonsäuren, deren Salze, sowie deren Amide bzw. N-Methylolamide und Nitrile, ethylenisch ungesättigte Sulfonsäuren sowie deren Salze, Silan-funktionelle ethylenisch ungesättigte Verbindungen, ethylenisch ungesättigte heterocyclische Verbindungen, Alkylvinylether, Vinylketone, Diene, Olefine, Vinylaromaten, und Vinylhalogenide.

Geeignete Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 13 C-Atomen, beispielsweise VeoVa9^{R} oder VeoVa10^{R} (Handelsnamen der Firma Resolutions).

Beispiele für geeignete ethylenisch ungesättigte Mono- und DiCarbonsäuren, deren Salze sowie deren Amide bzw. N-Methylolamide und Nitrile sind Acrylsäure, Methacrylsäure, Crotonsäure, Itaconsäure, Fumarsäure, Maleinsäure, Acrylamid, N-Methylolacrylamid, N-Methylolmethacrylamid und Acrylnitril, Methacrylnitril. Beispiele für ethylenisch ungesättigte Sulfonsäuren sind Vinylsulfonsäure und 2-Acrylamido-2-methyl-propansulfonsäure. Geeignete ethylenisch ungesättigte heterocyclische Verbindungen sind N-Vinylpyrrolidon, Vinylpyridin, N-Vinylimidazol, N-Vinylcaprolactam. Geeignet sind auch kationische Monomere wie Diallyldimethylammoniumchlorid (DADMAC), 3-Trimethylammoniumpropyl(meth)acrylamidchlorid (MAPTAC) und 2-Trimethylammoniumethyl(meth)acrylatchlorid.

Als Vinylaromaten bevorzugt sind Styrol, α-Methylstyrol und Vinyltoluol. Bevorzugte Vinylhalogenide sind Vinylchlorid, Vinylidenchlorid, Vinylfluorid. Die bevorzugten Olefine sind Ethylen, Propylen und die bevorzugten Diene sind 1,3-Butadien und Isopren.

Bevorzugte Alkylvinylether sind Ethylvinylether, n-Butylvinylether, iso-Butylvinylether, tert-Butylvinylether, Cyclohexylvinylether, Octadecylvinylether, Hydroxybutylvinylether, Cyclohexandimethanolmonovinylether. Weitere geeignete ethylenisch ungesättigte Monomere sind Vinylmethylketon, N-Vinylformamid, N-Vinyl-N-Methylacetamid, Vinylcarbazol, Vinylidencyanid.

Beispiele für ethylenisch ungesättigte Silane sind γ-Acryl-und γ-Methacryloxypropyltri(alkoxy)silane, α-Methacryloxymethyltri(alkoxy)silane, γ-Methacryloxypropyl-methyldi(alkoxy)silane, Vinylalkyldi(alkoxy)silane und Vinyltri(alkoxy)-silane, wobei als Alkoxygruppen beispielsweise Methoxy-, Ethoxy-, Propoxy-, Isopropoxy-, Methoxyethylen-, Ethoxyethylen-, Methoxypropylenglykolether- bzw. Ethoxypropylenglykolether-Reste eingesetzt werden können.

Weitere Beispiele für geeignete Monomere sind vorvernetzende Comonomere wie mehrfach ethylenisch ungesättigte Comonomere, beispielsweise Divinyladipat, Divinylbenzol, Diallylmaleat, Allylmethacrylat, Butandioldiacrylat oder Triallylcyanurat; oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats.

Bevorzugt werden nachfolgende Copolymer-Festharze: Vinylacetat-Vinylchlorid-, Vinylacetat-n-Butylacrylat-, Vinylacetat-Methylmethacrylat-, Vinylacetat-Hydroxyethylacrylat-, Vinylacetat-2-Ethylhexylacrylat-, Vinylacetat-Crotonsäure-Festharze und Festharze von Copolymeren des Vinylchlorids mit Vinylacetat und ungesättigten Mono- oder Dicarbonsäuren.

Die Polydispersität PD ist der Quotient Mw/Mn aus gewichtsmittlerem Molekulargewicht Mw und zahlenmittlerem Molekulargewicht Mn. Die Bestimmung von Mn und Mw erfolgt mittels Size Exclusion Chromatography (SEC) gegen Polystyrol-Standard, in THF, bei 40°C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl.

Bevorzugt werden Festharze mit einer PD von ≥ 6 bei einem Molekulargewicht Mw von < 300.000. Besonders bevorzugt werden Festharze mit einer PD von 5 bis 10 bei einem Molekulargewicht Mw von 100.000 bis < 300.000, mit einer PD von 10 bis 20 bei einem Molekulargewicht Mw von 300.000 bis 500.000 und mit einer PD von 15 bis 50 bei einem Molekulargewicht Mw von 500.000 bis 1.500.000.

Am meisten bevorzugt werden Festharze mit einer PD von 5 bis 7 bei Mw von 100.000 bis 150.000, mit einer PD von 6 bis 10 bei Mw von 150.000 bis 200.000, mit einer PD von 7 bis 15 bei Mw von 200.000 bis 250.000, mit einer PD von 8 bis 20 bei Mw von 250.000 bis 300.000, mit einer PD von 10 bis 20 bei Mw von 300.000 bis 500.000, mit einer PD von 15 bis 40 bei Mw von 500.000 bis 800.000, und mit einer PD von 20 bis 50 bei Mw von 800.000 bis 1.500.000.

Die erfindungsgemäßen Festharze zeichnen sich noch dadurch aus, dass sie anstelle einer breiten Molekulargewichtsverteilung, auch eine bi-, tri- oder polymodale aufweisen können.

Im Allgemeinen wird beim Suspensionspolymerisationsverfahren ein wässriges Suspensionsmedium in einem Reaktor vorgelegt, welches zur Stabilisierung der Suspension oberflächenaktive Substanzen wie Schutzkolloide, gegebenenfalls in Kombination mit Emulgatoren, enthält. Bevorzugt werden 0,001 bis 5,0 Gew.-%, besonders bevorzugt 0,001 bis 2,0 Gew.-% oberflächenaktive Substanz, eingesetzt. Bevorzugt wird nur in Gegenwart von Schutzkolloid polymerisiert. Geeignete Schutzkolloide sind beispielsweise teilverseifte Polyvinylalkohole, Polyvinylpyrrolidone, Polyvinylacetale, Stärken, Cellulosen und deren Carboxymethyl-, Methyl-, Hydroxyethyl-, Hydroxypropyl-Derivate.

Geeignete Emulgatoren sind sowohl anionische, kationische als auch nicht-ionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 60 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit bis zu 60 Ethylenoxid- bzw. Propylenoxid-Einheiten.

Das Basismonomer und gegebenenfalls weitere Comonomere können insgesamt vorgelegt werden, insgesamt zudosiert werden oder in Anteilen vorgelegt werden und der Rest nach der Initiierung (Start) der Polymerisation zudosiert werden. Bevorzugt werden das Basismonomer und gegebenenfalls weitere Comonomere insgesamt vorgelegt, und der Regler zudosiert. In einer weiteren bevorzugten Ausführungsform wird der Monomeranteil zu 90 bis 99 Gew.-%, bezogen auf das Gesamtgewicht der Monomere, vorgelegt und der Rest und der Regler zudosiert.

Der Regler wird erst ab Erreichen eines Monomerumsatzes von 1 bis 50 %, am meisten bevorzugt 10 bis 50 % Monomerumsatz, zudosiert. Die Dosierung des Reglers kann mittels Stoßdosierung, das heißt innerhalb 1 bis 15 Minuten, erfolgen. Der Regler kann auch kontinuierlich zudosiert werden, vorzugsweise über 20 bis 50 % der Polymerisationszeit, im allgemeinen entspricht dies einem Zeitraum von 1 bis 4 Stunden.

Die Polymerisation wird mittels Zugabe von Initiator und Erhitzen auf Polymerisationstemperatur gestartet. Als Start der Polymerisation gilt der Zeitpunkt, zu dem die Polymerisationstemperatur erreicht wird und eine Exothermie beobachtet wird. Der Initiator kann ganz oder teilweise mit den Monomeren vorgelegt werden oder auch insgesamt zudosiert werden.

Die Initiierung der Polymerisation erfolgt mit den gebräuchlichen monomerlöslichen Initiatoren oder Redox-Initiator-Kombinationen. Beispiele für monomerlösliche Initiatoren sind Dicetylperoxydicarbonat, Di-(2-ethylhexyl)peroxydicarbonat, 1,1-Bis(t-Butylperoxy)-3,3,5-trimethylcyclohexan, Di-(4-t-Butylcyclohexyl)peroxydicarbonat, Dicyclohexylperoxydicarbonat, Dibenzoylperoxid, Dilauroylperoxid, t-Amylperoxypivalat, t-Butylperneodecanoat, t-Butyl-peroxy-2-ethylhexanoat, t-Butylperpivalat oder Azoinitiatoren wie Azoisobutyronitril.

Die genannten Initiatoren werden im allgemeinen in einer Menge von 0,01 bis 10,0 Gew.-%, bevorzugt 0,01 bis 3,0 Gew.-%, besonders bevorzugt 0,01 bis 1,0 Gew.-%, jeweils bezogen auf das Gesamtgewicht der Monomere, eingesetzt. Als Redox-Initiatoren verwendet man Kombinationen aus den genannten öllöslichen Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt im allgemeinen 0,01 bis 10,0 Gew.-%, bevorzugt 0,01 bis 1,0 Gew.-%, jeweils bezogen auf das Gesamtgewicht der Monomere.

Die Reaktion wird in einer inerten Atmosphäre durchgeführt, die man durch Spülen mit Stickstoff erzeugt, um Luft und Sauerstoff zu eliminieren. Nach Erwärmen unter Rühren auf 30°C bis 90°C, vorzugsweise 50°C bis 70°C, startet die Polymerisation. Die Reaktionsmischung wird für 2 bis 20 Stunden unter Rühren auf Reaktionstemperatur gehalten, wobei 4 bis 10 Stunden in der Regel ausreichen, um einen Umsatz von > 90 % zu erreichen.

Geeignete das Molekulargewicht regelnde Verbindungen sind dem Fachmann bekannt. Eine Auflistung geeigneter Regler (Kettenüberträger) findet sich im "Polymer Handbook" von Brandrup, Immergut und Grulke, J. Wiley (1999). Übliche Regler sind beispielsweise aliphatische Aldehyde, vorzugsweise mit 1 bis 4 C-Atomen, wie Formaldehyd, Acetaldehyd, Propionaldehyd, n-Butyraldehyd und Isobutyraldehyd. Geeignet sind auch ein- oder mehrwertige Alkohole, vorzugsweise mit 1 bis 6 C-Atomen, wie Isopropanol, n-Butanol, Isobutanol, Glykol und Glycerin. Es können auch Mercaptoverbindungen, vorzugsweise mit 1 bis 12 C-Atomen, wie Mercaptopropionsäure, Mercaptoethanol, Mercaptopropanol, Mercaptobutanole, Mercaptohexanol, Butylmercaptane und Thioglyolsäure eingesetzt werden. Auch Lösemittel wie Aceton und Toluol, sind geeignet. Zur Regelung können auch noch Comonomere mit regelnder Wirkung eingesetzt werden. Im Falle von Vinylester-Basismonomer sind dies vorzugsweise (Meth)acrylate, besonders bevorzugt Glycidyl(meth)acrylat, 2-Hexylethylacrylat, n-Butylacrylat. Am meisten bevorzugt werden aliphatische Aldehyde mit 1 bis 4 C-Atomen, insbesondere n-Butyraldehyd.

Die Menge an Regler hängt vom angestrebten Molekulargewicht und der Übertragungskonstante ab. Die Übertragungskonstanten sind in "Polymer Handbook" von Brandrup, Immergut und Grulke, J. Wiley (1999) beschrieben. Anhand dieser Angaben kann der Fachmann die passende Reglermenge abschätzen. Im Falle von Butyraldehyd werden vorzugsweise 0,01 bis 15 Mol-% Regler, bezogen auf den Monomeranteil, eingesetzt. Wesentlich ist, den Regler so zuzugeben, dass das molare Verhältnis von Regler zu freiem Monomer im Verlauf der Polymerisation zunimmt. Auf diese Weise steigt die Konzentration an Molekulargewichtsregler über den Polymerisationsverlauf an und nimmt nicht wie bei der bloßen Vorlage des Reglers über den Polymerisationsverlauf ab. Der Molekulargewichtsregler kann dabei bereits teilweise schon vorgelegt werden, falls die Polymerisation ansonsten zu exotherm verläuft und die Restmenge des Reglers kann als Stoßdosierung zugegeben oder bereits ab Reaktionsbeginn über einen definierten Zeitraum kontinuierlich, mit einem Teil des Monomeren, dosiert werden.

Nach Abschluss der Polymerisation kann das Suspensionspolymerisat noch von nicht umgesetzten Monomeren oder zugesetztem und nicht abreagiertem Molekulargewichtsregler durch Destillation befreit werden. Daraufhin werden die erzeugten Perlen vom Suspensionsmedium, welches gegebenenfalls für den nächsten Suspensionspolymerisationsansatz wieder eingesetzt werden kann, abgetrennt, mit Wasser gewaschen und getrocknet. Das durch Suspensionspolymerisation hergestellt Harz fällt in Form von Perlen oder Mikrokugeln an; mit einem Durchmesser von 0,1 mm bis 3,0 mm.

Einsatzgebiete für die erfindungsgemäßen Festharze sind alle Anwendungen, in denen auch bisher schon Polyvinylacetat-Festharze eingesetzt wurden, vor allem als Bindemittel für Beschichtungsmittel und Klebemittel. Bevorzugt wird die Anwendung in lösemittelhaltigen Klebemitteln wie Parkettklebstoffen und Allesklebern oder in Schmelzklebern. Bevorzugt wird auch die Verwendung als Low Profile Additive und als Zusatz in Schallschutzmatten.

Allgemeine Vorschrift für die (Vergleichs)Beispiele:

In einen 3-Liter Reaktor wurden 900 g einer wässrigen 0,5 %-igen Polyvinylalkohollösung (Hydrolysegrad 88 Mol-%; Höppler-Viskosität in 4 %-iger wässriger Lösung bei 20°C gemäß DIN 53015 von 18 mPas) vorgelegt und unter Rühren 500 g Vinylacetat und 0,5 g tert.-Butylperoxy-2-ethylhexanoat zugegeben. Nach Spülen mit Stickstoff wurde die Reaktionmasse auf 50°C erwärmt und 5 Stunden bei dieser Temperatur gehalten. Ab Erreichen der Polymerisationstemperatur von 50°C und Beginn der exothermen Reaktion wurde der in der Tabelle angegebene Regler, in der dort bezeichneten Menge und ab dem dort genannten Zeitpunkt zugegeben. Nach Ablauf der 5-stündigen Polymerisationszeit wurde - zur Vervollständigung der Reaktion - noch weitere 2 Stunden bei 80°C gerührt. Nachdem die Suspension unter Rühren abgekühlt worden war, wurden die Perlen abfiltriert, mit Wasser gewaschen und anschließend getrocknet.

Die Festharze aus den in Tabelle 1 zusammengestellten (Vergleichs)beispielen wurden anschließend in einer typischen Klebstoffformulierung getestet. Bewertet wurde die Brookfield-Viskosität der gebrauchsfertigen Formulierung und die nach DIN 68602 bestimmte Scherzugfestigkeit der Verklebung.

Die Formulierung bestand aus folgenden Bestandteilen und Mengen:
21 Gew.-% des Harzes aus Tabelle 1
15 Gew.-% Polyvinylacetatharz (VINNAPAS^{R} B60)
32 Gew.-% Methylacetat
32 Gew.-% Ethanol (99 %-ig)

Vergleicht man die Ergebnisse von Beispiel 1 mit Vergleichsbeispiel 5 aus Tabelle 1 so sieht man, dass das erfindungsgemäße Festharz bei vergleichbarem mittlerem Molekulargewicht eine deutlich höhere Polydispersität zeigt, was zu einer niedrigeren Lösungsviskosität in der Klebstoffformulierung führt. Auch beim Vergleich von Beispiel 2 mit Vergleichsbeispiel 6 und von Beispiel 3 mit Vergleichsbeispiel 7 wird dieser Zusammenhang deutlich.

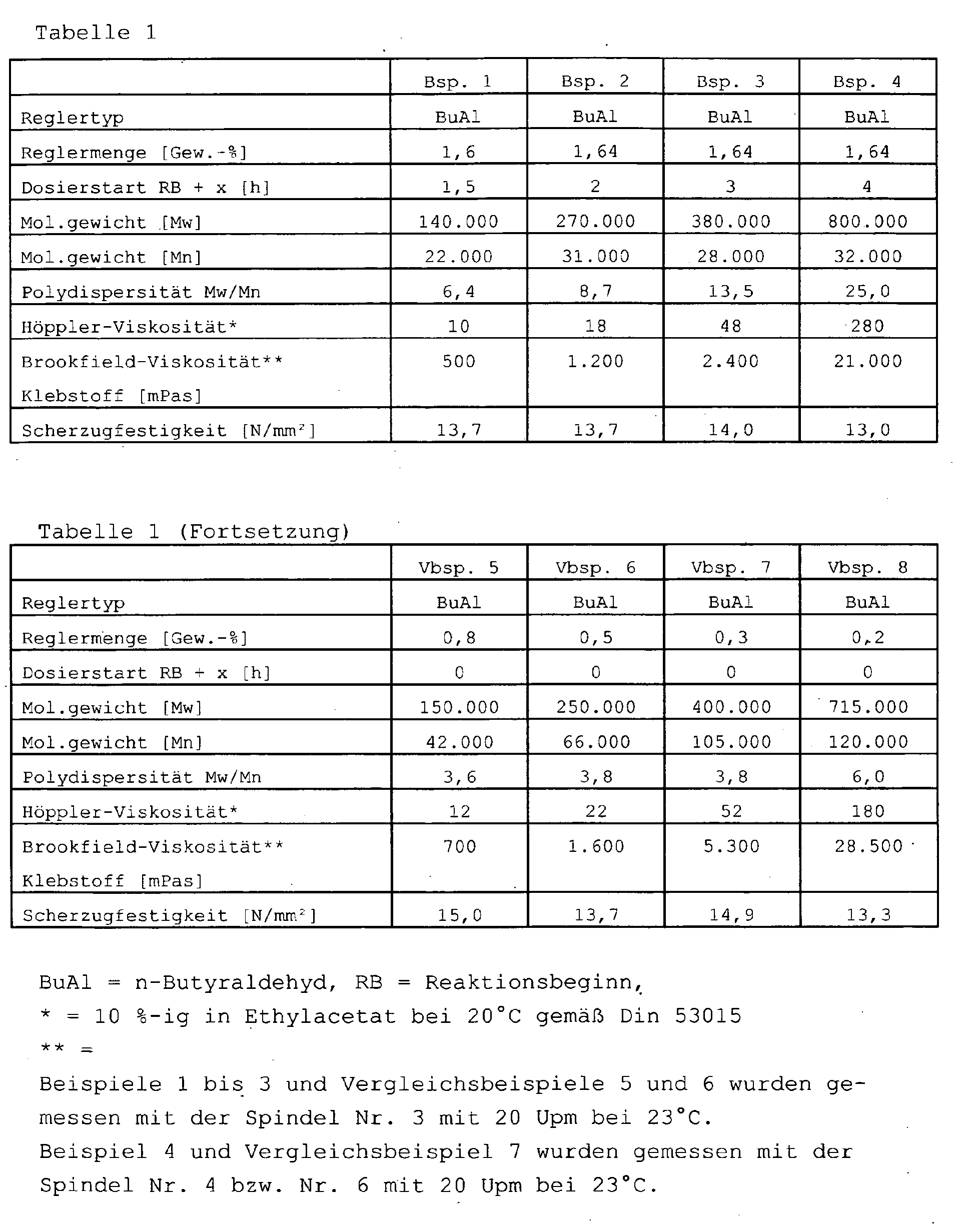

## Patentansprüche

1. Polyvinylester in Form deren Festharze, erhältlich mittels radikalisch initiierter Suspensionspolymerisation, **dadurch gekennzeichnet, dass** das Festharz bei einem gewichtsmittleren Molekulargewicht Mw von < 300000 eine Polydispersität PD von ≥ 5 und bei einem gewichtsmittleren Molekulargewicht Mw von 300.000 bis 1.500.000 eine Polydispersität PD von ≥ 10 aufweist.

2. Polyvinylester in Form deren Festharze gemäß Anspruch 1, **dadurch gekennzeichnet, dass** die Festharze eine PD von 5 bis 10 bei einem gewichtsmittlerem Molekulargewicht Mw von 100.000 bis < 300.000, eine PD von 10 bis 20 bei einem gewichtsmittleren Molekulargewicht Mw von 300.000 bis 500.000, und eine PD von 15 bis 50 bei einem gewichtsmittleren Molekulargewicht Mw von 500.000 bis 1.500.000 aufweisen.

3. Polyvinylester in Form deren Festharze gemäß Anspruch 1 und 2 aus der Gruppe umfassend Polyvinylacetat-Festharz.

4. Polyvinylester in Form deren Festharze gemäß Anspruch 1 oder 2, **dadurch gekennzeichnet, dass** vom Basismonomer verschiedene Comonomere in einer Menge von ≤ 50 Gew.-%, bezogen auf das Gesamtgewicht der Monomere, copolymerisiert sind.

5. Polyvinylester in Form deren Festharze gemäß Anspruch 4 aus der Gruppe umfassend Vinylacetat-Vinylchlorid-, Vinylacetat-n-Butylacrylat-, Vinylacetat-Methylmethacrylat-, Vinylacetat-Hydroxyethylacrylat-, Vinylacetat-2-Ethylhexylacrylat-, Vinylacetat-Crotonsäure-Festharze und Festharze von Copolymeren des Vinylchlorids mit Vinylacetat und ungesättigten Mono- oder Dicarbonsäuren.

6. Verfahren zur Herstellung von Polyvinylestern der Ansprüche 1 bis 5 mittels radikalisch initiierter Suspensionspolymerisation in wässrigem Medium von Vinylester- Basismonomer und gegebenenfalls bis zu 50 Gew.-%, bezogen auf das Gesamtgewicht der Monomere, weiterer damit copolymerisierbarer Monomere in Gegenwart von einer oder mehreren das Molekulargewicht regelnden Verbindungen, **dadurch gekennzeichnet, dass** die das Molekulargewicht regelnde Verbindung so zugegeben wird, dass das molare Verhältnis von Regler zu freiem Monomer im Verlauf der Polymerisation zunimmt, und der Regler erst ab Erreichen eines Monomerumsatzes von 1 bis 50 % zudosiert wird.

7. Verfahren zur Herstellung von Polyvinylestern gemäß Anspruch 6, **dadurch gekennzeichnet, dass** als das Molekulargewicht regelnde Verbindungen eine oder mehrere aus der Gruppe umfassend aliphatische Aldehyde mit 1 bis 4 C-Atomen, ein- oder mehrwertige Alkohole mit 1 bis 6 C-Atomen, Mercaptoverbindungen mit 1 bis. 12 C-Atomen, Comonomere mit regelnder Wirkung eingesetzt werden.

8. Verwendung der Polyvinylester der Ansprüche 1 bis 5 als Bindemittel für Beschichtungsmittel und Klebemittel.

9. Verwendung der Polyvinylester der Ansprüche 1 bis 5 als Low Profile Additive und als Zusatz in Schallschutzmatten.

## Claims

1. Polyvinyl esters in the form of their solid resins, obtainable by means of free-radically initiated suspension polymerization, **characterized in that** the solid resin for a weight-average molecular weight Mw of < 300 000 has a polydispersity PD of ≥ 5 and for a weight-average molecular weight Mw of 300 000 to 1 500 000 has a polydispersity PD of ≥ 10.

2. Polyvinyl esters in the form of their solid resins according to Claim 1, **characterized in that** the solid resins have a PD of 5 to 10 for a weight-average molecular weight Mw of 100 000 to < 300 000, a PD of 10 to 20 for a weight-average molecular weight Mw of 300 000 to 500 000, and a PD of 15 to 50 for a weight-average molecular weight Mw of 500 000 to 1 500 000.

3. Polyvinyl esters in the form of their solid resins according to Claim 1 and 2 from the group encompassing solid polyvinyl acetate resin.

4. Polyvinyl esters in the form of their solid resins according to Claim 1 and 2, **characterized in that** comonomers different from the base monomer are copolymerized in an amount of ≤ 50% by weight, based on the total weight of the monomers.

5. Polyvinyl esters in the form of their solid resins according to Claim 4, from the group encompassing solid vinyl acetate-vinyl chloride, vinyl acetate-n-butyl acrylate, vinyl acetate-methylmethacrylate, vinyl acetate-hydroxyethyl acrylate, vinyl acetate-2-ethylhexyl acrylate and vinyl acetate-crotonic acid resins and solid resins of copolymers of vinyl chloride with vinyl acetate and unsaturated monocarboxylic or dicarboxylic acids.

6. Process for preparing polyvinyl esters of Claims 1 to 5 by means of free-radically initiated suspension polymerization in aqueous medium from vinyl ester base monomer and if desired up to 50% by weight, based on the total weight of the monomers, of further monomers, copolymerizable therewith, in the presence of one or more molecular weight regulator compounds, **characterized in that** the molecular weight regulator compound is added such that the molar ratio of regulator to free monomer increases in the course of the polymerization, and the regulator is metered in only after a monomer conversion of 1% to 50% has been reached.

7. Process for preparing polyvinyl esters according to Claim 6, **characterized in that** molecular weight regulator compounds used are one or more from the group encompassing aliphatic aldehydes having 1 to 4 C atoms, monohydric or polyhydric alcohols having 1 to 6 C atoms, mercapto compounds having 1 to 12 C atoms, and comonomers with a regulator effect.

8. Use of the polyvinyl esters of Claims 1 to 5 as binders for coating materials and adhesives.

9. Use of the polyvinyl esters of Claims 1 to 5 as low profile additives and as an addition to soundproofing mats.

## Revendications

1. Poly(ester vinylique)s sous forme de leurs résines solides, pouvant être obtenus par polymérisation en suspension à amorçage radicalaire, **caractérisés en ce que** la résine solide présente pour une masse moléculaire moyenne en poids Mw de < 300 000 une polydispersité PD de ≥ 5 et pour une masse moléculaire moyenne en poids Mw de 300 000 à 1 500 000 une polydispersité PD de ≥ 10.

2. Poly(ester vinylique)s sous forme de leurs résines solides selon la revendication 1, **caractérisés en ce que** les résines solides présentent une PD de 5 à 10 pour une masse moléculaire moyenne en poids Mw de 100 000 à < 300 000, une PD de 10 à 20 pour une masse moléculaire moyenne en poids Mw de 300 000 à 500 000, et une PD de 15 à 50 pour une masse moléculaire moyenne en poids Mw de 500 000 à 1 500 000.

3. Poly(ester vinylique)s sous forme de leurs résines solides selon les revendications 1 et 2, choisis dans le groupe comprenant une résine solide poly(acétate de vinyle).

4. Poly(ester vinylique)s sous forme de leurs résines solides selon la revendication 1 ou 2, **caractérisés en ce que** des comonomères différents du monomère de base sont copolymérisés en une quantité de ≤ 50 % en poids, par rapport au poids total des monomères.

5. Poly(ester vinylique)s sous forme de leurs résines solides selon la revendication 4, choisis dans le groupe comprenant les résines solides acétate de vinyle/chlorure de vinyle, acétate de vinyle/acrylate de n-butyle, acétate de vinyle/méthacrylate de méthyle, acétate de vinyle/acrylate d'hydroxyéthyle, acétate de vinyle/acrylate de 2-éthylhexyle, acétate de vinyle/acide crotonique et les résines solides de copolymères du chlorure de vinyle avec l'acétate de vinyle et des acides mono- ou dicarboxyliques insaturés.

6. Procédé pour la production de poly(ester vinylique)s des revendications 1 à 5 par polymérisation en suspension à amorçage radicalaire en milieu aqueux de monomère de base ester vinylique et éventuellement de jusqu'à 50 % en poids, par rapport au poids total des monomères, d'autres monomères copolymérisables avec celui-ci, en présence d'un ou plusieurs composants régulant la masse moléculaire, **caractérisé en ce que** le composé régulant la masse moléculaire est ajouté de manière que le rapport molaire du régulateur au monomère libre augmente au cours de la polymérisation, et le régulateur n'est ajouté par addition dosée qu'une fois atteint un degré de conversion des monomères de 1 à 50 %.

7. Procédé pour la production de poly(ester vinylique)s selon la revendication 6, **caractérisé en ce qu'**on utilise comme composés régulant la masse moléculaire un ou plusieurs composés choisis dans le groupe comprenant des aldéhydes aliphatiques ayant de 1 à 4 atomes de carbone, des alcools mono- ou polyhydriques ayant de 1 à 6 atomes de carbone, des composés mercapto ayant de 1 à 12 atomes de carbone, des comonomères à effet régulateur.

8. Utilisation des poly(ester vinylique)s des revendications 1 à 5, en tant que liants pour des produits de revêtement et des adhésifs.

9. Utilisation des poly(ester vinylique)s des revendications 1 à 5, en tant qu'additifs Low Profile et en tant qu'additif dans des mats d'insonorisation.
